(19) Europäisches Patentamt
European Patent Office
Office européen des brevets

(11) **EP 4 389 253 B1**

(12) **EUROPEAN PATENT SPECIFICATION**

(45) Date of publication and mention
of the grant of the patent:
**17.12.2025  Bulletin 2025/51**

(21) Application number: **23218790.6**

(22) Date of filing: **20.12.2023**

(51) International Patent Classification (IPC):
*B01D 29/54* (2006.01)    *B01D 29/58* (2006.01)
*B01D 35/12* (2006.01)    *B01D 35/147* (2006.01)
*B01D 36/00* (2006.01)    *B01D 27/08* (2006.01)
*B01D 27/10* (2006.01)    *B01D 27/14* (2006.01)
*C02F 1/00* (2023.01)    *C02F 1/28* (2023.01)
*C02F 1/42* (2023.01)    *B01D 35/143* (2006.01)

(52) Cooperative Patent Classification (CPC):
**B01D 29/54; B01D 27/08; B01D 27/103;
B01D 27/142; B01D 27/146; B01D 29/58;
B01D 35/12; B01D 35/1435; B01D 35/147;
B01D 36/001;** B01D 2201/302; C02F 1/001;
C02F 1/281; C02F 1/283; C02F 1/42;     (Cont.)

(54) **WATER TREATMENT SYSTEM**

WASSERBEHANDLUNGSSYSTEM

SYSTÈME DE TRAITEMENT DE L'EAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **21.12.2022  IL 29936322
26.06.2023  IL 30407523**

(43) Date of publication of application:
**26.06.2024  Bulletin 2024/26**

(73) Proprietor: **Drops Tech 2015 Ltd
2015600 Misgav Mobile Post (IL)**

(72) Inventor: **ZISER, Baruch
2015600 MISGAV MOBILE POST (IL)**

(74) Representative: **ZBM Patents - Zea, Barlocci &
Markvardsen
Rambla de Catalunya, 123
08008 Barcelona (ES)**

(56) References cited:
**EP-A2- 0 844 012       KR-A- 20220 069 252
US-A1- 2012 031 821    US-A1- 2015 321 926
US-A1- 2016 353 920    US-A1- 2020 261 830
US-A1- 2021 107 820**

(52) Cooperative Patent Classification (CPC): (Cont.)
C02F 2301/043; C02F 2307/10

**Description**

**BACKGROUND**

Commercially available water purification systems for household use suffer from several shortcomings. For example,various vendors offer a comprehensive line of jugs that include a replaceable small component with ion-exchange resin as well as activated carbon media, which do help purify the water passing through the media; however, the water is typically tasteless and too low in minerals such as magnesium as a result of the ion-exchange on the resin, and the activated carbon is a perfect substrate for the growth of bacteria and other potentially harmful microorganisms in the filters. In fact, the treated water is typically unsuitable for direct consumption.

A simple bypass could be added to a water purification system which is added to the water exiting the filter, to increase the mineral content. Alternatively, minerals can be added to the water exiting the filter.

However, such proposed solutions either inadequately treat some of the water, or still do not properly address the contamination, or do not provide a good solution to the necessary or desired adjustment of the water's mineral content according to the source of the water [hard or soft], or the user's preference.

Typically, a household's or small/large organization's water purification system includes at least one filter and at least one filter head, each filter has a filter head attached thereon, and water is typically provided to the filter via the filter head. The filter is typically periodically replaced whereas the filter head is reused with new filters. It would be beneficial to be able to retrofit commercially available water purification systems to improve their water quality, however the majority of such systems have the vendor's filter head as the major fixture and thus adjustment of the system is problematic.

EP0844012A discloses an element-replaceable type filter comprising a base and a cap for accommodating therein an element assembly having a filter element and removably engageable with each other.

US2016/353920A discloses media cartridges that have adjustable bypasses using linear movement, and systems and methods that use them.

US2015/321926A discloses media cartridges that have adjustable bypasses, and systems and methods that use them.

KR20220069252A discloses a filter head of a rotation coupling water purifying system with a bypass path.

**SUMMARY**

The details of one or more embodiments of the disclosure are set forth in the accompanying drawings and the description below. Other features, objects, and advantages will be apparent from the description and drawings, and from the claims.

One aspect is that the mineral content of the water supplied, for example for household consumption, is tunable in a replaceable filter as opposed to adjustment in a filter head. A user can easily set the filter while using essentially any filter head, without need to do any change or replacement of the filter head which is usually harder to replace and is essentially not replaceable.

The filter is suitable for globally standard commercially available size standards and structures and thus replacement of installed filters with the provided filters does not necessitate installation of a new water treatment system.

The water composition [solutes] varies amongst different countries, towns, and sometimes within the same street at different houses. Therefore, the solution, i.e., tuning the water's flavour according to all users' different preferences, is particularly challenging and revolutionary.

The provided water treatment filters, filter heads and water treatment systems and methods reduce solutes [ions, molecules, gases etc.] by between 0% and 100% and anywhere between in one filtration, without requiring any connecting to a sewage system, without any water storage, and with continuous flow possible, including the options of reducing gases and microorganisms in the treated water.

According to one aspect

a water treatment system is provided, comprising a filter and a filter head;
the filter comprising:

a cartridge;
a cap attached to the cartridge;
the cartridge comprising:

a first compartment comprising at least one first water-treating medium;
a second compartment comprising at least one second water-treating medium;
the cap comprising a selector;
the filter further comprising at least one bypass extending from the selector and throughout the first compartment and into the second compartment, each of the at least one bypass having an inlet and an outlet;
wherein the selector is operable to allow selecting:

in a first state all water entering the filter passing through the first compartment;
in a second state all water entering the filter bypassing the first compartment and passing through the second compartment;
in at least one intermediate state a first part of water entering the filter passing through the first compartment and a second part of water entering the filter bypassing the first compartment and passing through the second compartment, and

the filter head reversibly attachable to the cap.

Some system embodiments further comprise a water inlet extending from the filter head to inside the cap, such that water entering the cap for treatment spills onto the disc.

Some system embodiments further comprise a water outlet extending from the cartridge, and into the filter head.

In some embodiments the cap comprises a reference marking, and the selector comprises:

a dial marked thereon with indications, the indications representing:

the first state, the second state, and at least one intermediate state,

wherein each state is embossed at a different location on the dial;

and wherein each state occurs when the indication representing the state is aligned with the reference marking.

In some embodiments the selector further comprises an arcuate trough with an open top;

the dial comprising a rotatable disc having a cut-out part and a solid part,

the trough and disc structured and positioned relative to each other such that:

in the first state the solid part completely covers the open top;

in the second state the cut-out part completely faces the open top, and

in the at least one intermediate state the cut-out part incompletely faces the open top.

In some embodiments at least one bypass inlet is in the trough.

Some embodiments further comprise a third compartment; the third compartment comprising filter material.

In some embodiments the filter material is ultrafiltration material.

Some embodiments further comprise a filter element within the second compartment and covering each bypass outlet of the at least one bypass, thereby preventing ingress of the second water-treating medium into the at least one bypass.

In some embodiments the cap comprises a space sized to accommodate expansion of the first water-treating medium.

In some embodiments the first water-treating medium is a water softening resin.

In some embodiments second water-treating medium is selected from:

titania, iron (III) oxides, iron (III) hydroxides, carbon-based media and mixtures thereof.

In some embodiments the carbon-based media are selected from a group consisting of:

activated carbon, carbon nanotubes, carbon molecular sieves, charcoal, catalytic carbon and mixtures thereof.

Some embodiments further comprising a water outlet extending from the cartridge, through the disc and out of the cap.

In some embodiments the at least one bypasses are internal to the cartridge.

In some embodiments the first state all water passing through the first compartment subsequently passes through the second compartment.

In some embodiments one or more of the at least one bypass comprises magnesium and essentially does not comprise calcium.

In some embodiments one or more of the at least one bypass comprises magnesium and essentially does not comprise calcium.

In some embodiments none of the at least one bypass essentially comprise calcium.

According to another aspect, a water treatment system is provided comprising

a filter and a filter head;

the system further comprising a pressure-sensitive button capable of popping when pressure of water flowing out of the filter head is above a predetermined value and sinking when pressure of water flowing out of the filter head is below a predetermined value.

Some embodiments further comprise an observation portal enabling view of water flowing out of the filter head.

Some embodiments further comprise a release portal for release of gases from water flowing out of the filter head.

In some embodiments the observation portal, pressure sensitive button and/or release portal are disposed in the filter head.

In some embodiments with the pressure-sensitive button the filter comprises:

a cartridge;

a cap attached to the cartridge;

the cartridge comprising:

a first compartment comprising at least one first water-treating medium;

a second compartment comprising at least one second water-treating medium;

the cap comprising a selector;

the filter further comprising at least one bypass extending from the selector and throughout the first compartment and into the second compartment, each of the at least one bypass having an inlet and an outlet;

wherein the selector is operable to allow selecting:

in a first state all water entering the filter passing through the first compartment;

in a second state all water entering the filter bypassing the first compartment and passing through the second compartment;

in at least one intermediate state a first part of water entering the filter passing through the first compartment and a second part of water entering the filter bypassing the first compartment and passing through the second compartment, and

the filter head reversibly attachable to the cap.

It should be appreciated that all combinations of the foregoing concepts and additional concepts discussed in greater detail below are contemplated as being part of the inventive subject matter disclosed herein and may be used to achieve the benefits and advantages described herein.

## BRIEF DESCRIPTION OF DRAWINGS

Features of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.

**Figure 1** shows a cross-section of a filter **100**;
**Figure 2** illustrates in a perspective view part of the filter;
**Figure 3a** depicts in a top perspective view a selector for the filter in a first position;
**Figure 3b** depicts in a top perspective view the selector in a second position, and
**Figure 3c** depicts in a top perspective view the selector in the first position in a slightly different view;
**Figure 4** depicts in a top perspective view the selector in a third position, and
**Figure 5** is an exploded perspective view of a pop-up button for gas release in a filter head that can be engaged with any of the contemplated filters described below.

The accompanying drawings, which are incorporated into and constitute a part of this specification, illustrate one or more embodiments of the disclosure and, together with the detailed description, serve to explain the principles and implementations of the disclosure.

## DETAILED DESCRIPTION

The systems, devices, kits, and methods disclosed herein each have several aspects, no single one of which is solely responsible for their desirable attributes. Without limiting the scope of the claims, some prominent features will now be discussed briefly. Numerous other examples are also contemplated, including examples that have fewer, additional, and/or different components, steps, features, objects, benefits, and advantages. The components, aspects, and steps may also be arranged and ordered differently unless explicitly noted otherwise. After considering this discussion, and particularly after reading the section entitled "Detailed Description," one will understand how the features of the devices and methods disclosed herein provide advantages over other known devices and methods.

As used herein and in the appended claims, the singular forms "a," "an," and "the" include plural referents unless the context clearly dictates otherwise. Thus, for example, reference to "XXX includes a plurality of such XXX and reference to "the YYY" includes reference to one or more YYY, and so forth.

Also, the use of "or" means "and/or" unless stated otherwise. Similarly, "comprise," "comprises," "comprising," "include," "includes," "including," "have," "haves," and "having" are interchangeable and not intended to be limiting.

It is to be further understood that where descriptions of various embodiments use the term "comprising," those skilled in the art would understand that in some specific instances, an embodiment can be alternatively described using language "consisting essentially of" or "consisting of."

Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices and materials are described herein.

Water provided to households often requires filtration. For example, the water might be desalinated, such as when provided by desalination plants to households, or contain an excess of dissolved materials that make the water too hard. The water may also be contaminated with harmful substances and/or microorganisms. The water may also be unpalatable to the users. The various qualities of the supplied water and various needs and tastes of the users pose a great challenge to water-treatment manufacturers in an effort to provide a single system capable of meeting most or all of these various needs and desires.

When relating to water treated in jugs, in those apparatuses there is an overriding concern to extend to the maximum extent the life of the disposable water treating components in the jugs.

Although of course not advertised as such, the jugs are breeding grounds for bacteria and other microorganisms, especially on the active carbon parts of the water treating components. Such proliferation of microorganisms is the reason behind the requirement to boil the treated water before consumption.

Our system aims to provide healthier water that has at least some of the following features:

Adjustability of the acidity of the water close to neutral while the water also has a low to moderate hardness.

Amenability to addition of essential minerals such as magnesium and iodine in accordance with their levels in the water supplied to the client.

Compensation ability for the removal of water-treatment agents present in the feed water [removed to improve the water's flavour and/or odor in the system].

Extended functional life of the water-treating components. Actually the optimization of the life is the least consideration out of the four, and is merely a result of the former three features rather than a designed solution to lifetime problem.

Our system and filter aim to answer this need better than previous treatments offered.

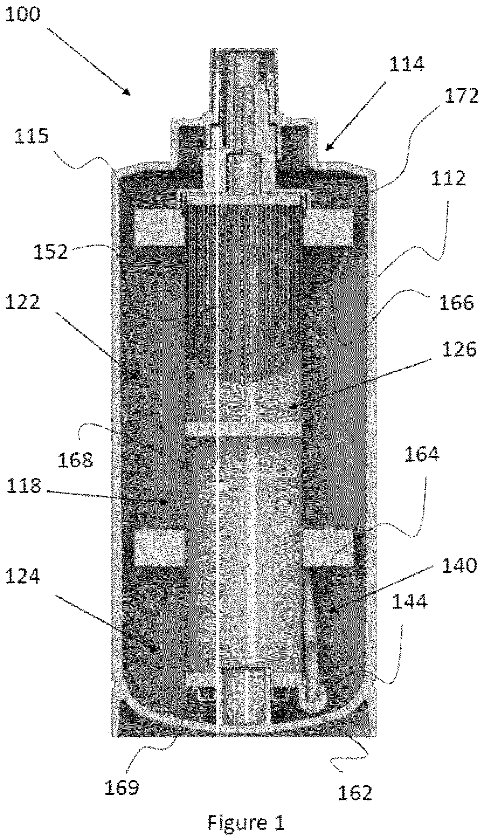

**Figure 1** shows a cross-section of a filter **100**.

According to one aspect the filter **100** comprises:

a cartridge **112**;
a cap **114** attached to the cartridge **112**;
the cartridge **112** comprising:

a first compartment **122** comprising at least one first water-treating medium [not shown];
a second compartment **124** comprising at least one second water-treating medium [not shown].

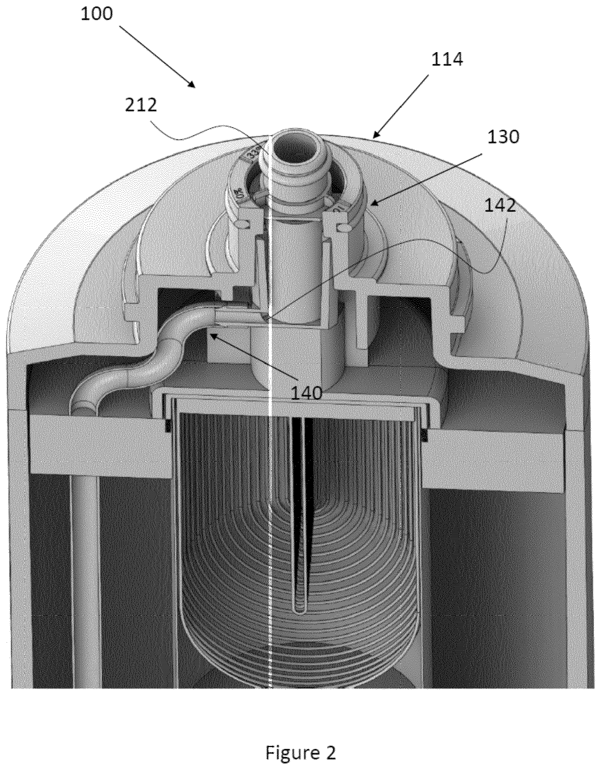

As shown in **Figure 2**, the cap **114** comprises a selector **130**.

As can been seen by viewing both **Figure 1** and **Figure 2**, the filter **100** further comprises a bypass **140** extending from the selector **130** and throughout the first compartment **122** and into the second compartment **124**, the bypass **140** having an inlet **142** and an outlet **144**.

As will be shown in further figures and in the description below, the selector **130** is operable to allow selecting:

in a first state a first portion of water entering the filter **100** passing through the first compartment **122**;

in a second state a second portion of water entering the filter **100** bypassing the first compartment **122** and passing through the second compartment **124**, and

in at least one intermediate state a third part of water entering the filter **100** passing through the first compartment **124** and a fourth part of water entering the filter **100** bypassing the first compartment **122** and passing through the second compartment **124**, wherein the third part is less than the first part and the fourth part is less than the second part.

In some embodiments in the first state all of the water that enters the filter **100** also goes through the first compartment **124**, in the second state all of the water that enters the filter **100** goes through the bypass **140**.

In some embodiments the bypass comprises compositions that may add solutes to the water passing therethrough. For example, such compositions comprise magnesium. The magnesium may be in a metallic form, for example in an alloy that includes magnesium, or in a non-metallic form, such in magnesium hydroxide or magnesium oxide. In some embodiments the magnesium is provided as a mixture of several different compositions. Such compositions allow for the slow release of magnesium in the water passing through. The compositions may be provided in the form of pellets or beads to provide a large contact area with the water passing through.

At present I believe that the embodiments with at least one bypass comprising magnesium operate most efficiently, but other embodiments described below are also satisfactory.

The addition of magnesium can very advantageous and desirable both tastewise and health-wise, for example when the water that enters the filter is desalinated water.

In some embodiments the filter comprises a plurality of bypasses. In some embodiments at least one of the bypasses contains the compositions that add the solutes to the filtered water; in some embodiments not all of the bypasses contain these compositions.

In some filter embodiments these compositions are located at another area along the flow path. However, placing the compositions in the bypass is much preferred because for example if the compositions are in the first container, they will be removed by the water softener; moreover the water is passed through a water softener to remove ions such as magnesium so it is counterproductive. If the compositions are in the second container, then the agents, such as activated carbon, can remove [as desired] the reactants such as chlorine that may assist in the desired dissolution of magnesium into the water.

According to the paragraph above, one preferred product of the system is soft water that contain healthful amounts of magnesium. Such water may be suitable for preparation of beverages such as coffee in a coffee machine, that require supply of soft water, but the commercially available systems that provide soft water to such machines do not replenish the magnesium stripped off the water in a water softener. In some embodiments the system comprises bypass/es that do not essentially include calcium but do comprise magnesium. Therefore, in some embodiments the bypass/es may serve to allow very selectively adjusting the mineral content of the water rather softening it.

By "essentially" we mean that water coming out of the bypass has a ppm [mg/L] ratio of Ca/Mg of less than 0.2; more preferably less than 0.1; even more preferably less than 0.05.

In some embodiments the bypass/es can be instead or in addition a source of other minerals such as halides, for example iodine is a beneficial mineral.

For industrial use, such as solely for coffee machines in big firms, system embodiments may comprise bypasses which do not comprise magnesium. For example, these systems may be dedicated to bringing the water hardness to just below the threshold at which scaling occurs, for example 75 ppm. Therefore, the setting of the selector can be chosen to achieve this aim. For water supplies that are fairly consistent, which is the usual case for water supply in a certain region, the water can be tested to determine how to achieve the desired level.

$$100 * Y = 75ppm/ S\ ppm$$

Y is the percentage of water that is set to go through the bypass; S ppm is the hardness of the water in the source supplying the system. Most sources will have at least 75 ppm.

The level of the hardness of the water source can periodically be determined with instrumentation known in the art or in places such as homes with semiquantitative hardness indicating strips.

At homes emphasis may be placed on the health aspects of the system and thus in some home embodiments at least some of the bypasses essentially do not contain calcium but do contain magnesium. These systems require more intensive use of the water softener and thus are costlier to run as the resin requires more frequent replacement.

In referring to a "filter", it may come to mind that the term has a wide range of common, non-uniform meanings. For example, in some cases reference is made to a device or apparatus that contains various components, some of which do physically segregate particles according to their size and/or shape, whereas some other components fulfil other roles, for example housing said segregating component/s. In other uses the segregating component itself is referred to as a filter, and the housing could be referred to as a "cartridge". We have chosen to follow the laymen's nomenclature in this matter, in that an average user of a household water purification system refers to the component that needs to be periodically replaced simply as a "filter".

Examples of commercially available filter heads abound. For example, see

https://www.freshwatersystems.com/collections/filter-heads?
https://www.3m.com/3M/en_US/p/c/filtration-separation/liquid-filtration-components/heads/

In systems having such filter heads, as in our system, the filters are fed pressurized water and the water treatment is much superior to water treatment in jugs under gravity alone.

In some embodiments the first water-treating medium comprises an ion-exchange resin.

In some embodiments the second water-treating medium comprises a carbonaceous material such as activated carbon.

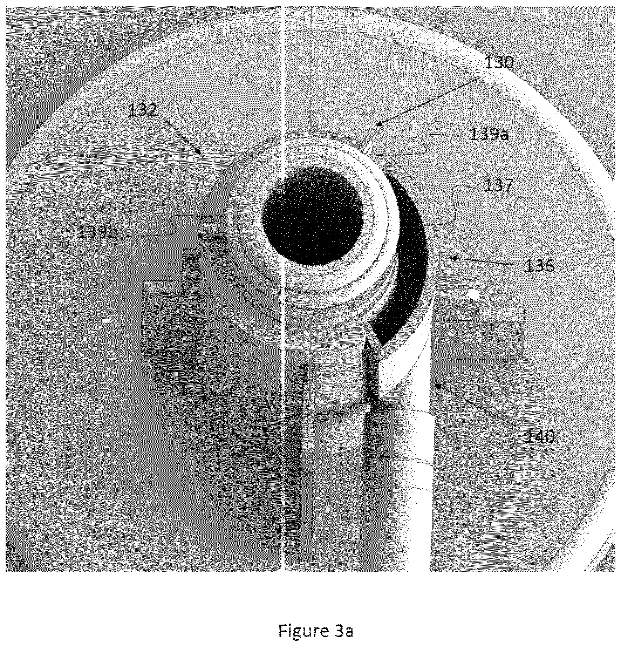

**Figure 3a** depicts the selector **130** in the first state, in which the selector **130** is in a state of "100%". In this state the bypass **140** is exposed and water can enter the bypass.

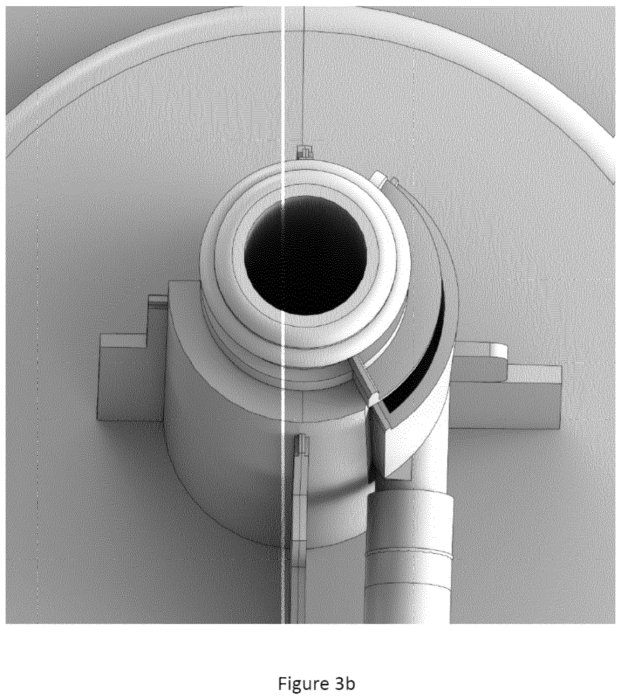

**Figure 3b** depicts the selector **130** in the second state, in which the selector **130** is in a state of "0%". In this state the bypass **140** is blocked and water cannot enter the bypass. Note that in the figure the blockage is incomplete; this is merely to illustrate the concept and to help visualize the state.

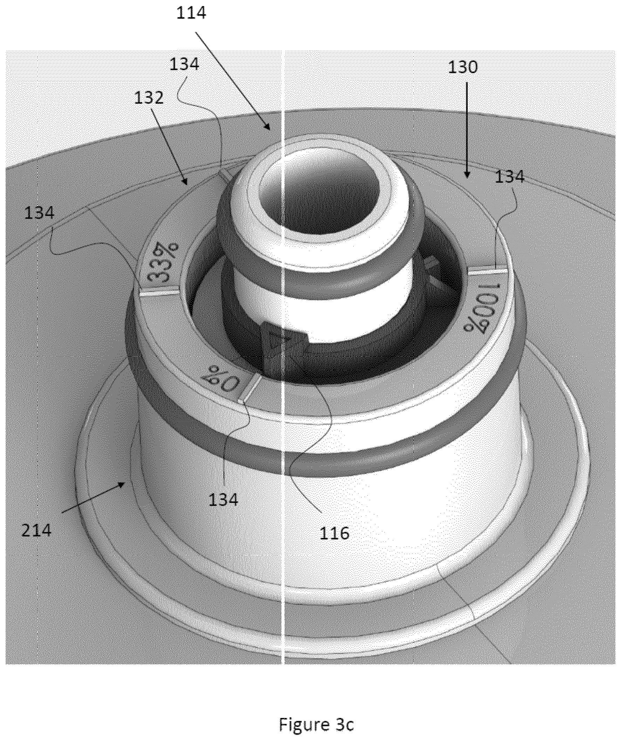

**Figure 3c** depicts the selector **130** when the filter is at "0%" state. A user can manually set the desired state according to the dial **132** on the selector **130**.

As shown in **Figure** 3c, the cap **114** comprises a reference marking **116**.

The marking is actually on an exit pipe of the filter [for water after treatment in the filter], but it can be on any other fixture in or on the cap **114**.

The selector **130** comprises:
a dial **132** marked thereon with indications **134,** the indications **134** representing:

the first state, the second state, and at least one intermediate state,
wherein each state is embossed at a different location on the dial **132;**
and wherein each state occurs when the indication **134** representing the state is aligned with the reference marking **116**.

The indications are a combination of the embossments on the dial and another on the body of the cap to know where to set to.

In some embodiments, such shown in **Figure 3a,** the selector **130** comprises an arcuate trough **136** with an open top **137**.

The dial **132** is shown in this figure without the indications. The dial **132** comprises a rotatable disc **138** having a cut-out part **139a** and a solid part **139b**.

The trough **136** and disc **138** are structured and positioned relative to each other such that:

in the first state the solid part **139b** completely covers the open top **137**;

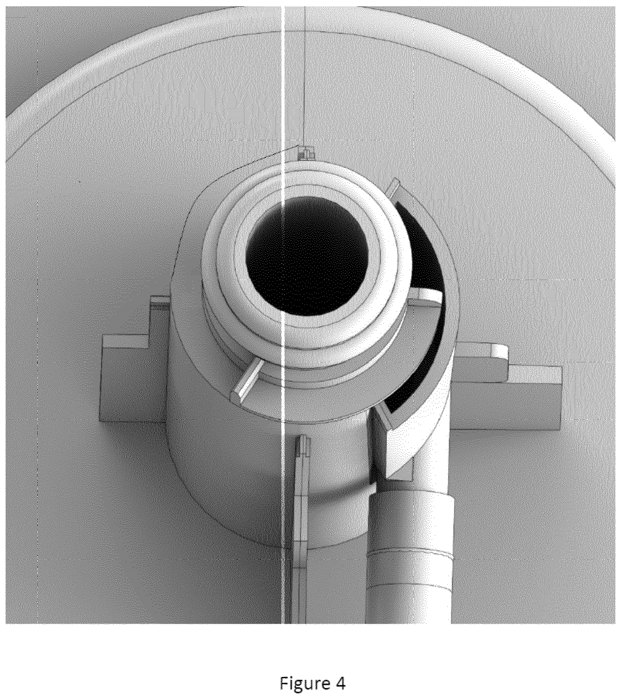

in the second state the cutout part **139a** completely faces the open top **137,** and

in the at least one intermediate state the cutout part **139a** incompletely faces the open top **137**. An intermediate state of "50%" is shown in **Figure 4.**

The bypass inlet is in the trough **136.**

"Structured" refers in general to both size and shape.

"Solid" refers to keeping a clear shape and being essentially impenetrable to water. In some embodiments the solid part is made of metal. In some embodiments the solid part is made of thermoplastic material/s.

"Essentially" is meant to be at least 95%; for example, "essentially impenetrable" means that less than 5% of the water passes through or around the solid part and not via the cut-out part.

Similarly, "all", "completely" may in some embodiments not be an absolute term, i.e., in some embodiments in the first state not quite all of the water that enters the filter 100 also goes through the first compartment, due to some leaks causing minor amounts of water not to go through the first compartment [for example when the incoming water is at a very high pressure]. In general, very soft water is required for some uses such as for raising some animals e.g., raising discus fish in aquariums, or it is important to have essentially all of the water pass through the first water-treating media, e.g., contaminated or brackish water, however even in such circumstances any leak is expected and designed to have no significant effect on the quality of the water exiting the filter. Of course, it is our aim to design and produce a product that is leak-free and such embodiments are much preferred.

"Cut-out part" relates to a part of the disc via which water can essentially freely pass. The cut-out part in some embodiments comprises a grid, a mesh, a sieve etc. which may help trap particles suspended in the incoming water. In some embodiments the part is simply no material.

In reference to "50%" it should be understood that:

a) The filter is designed, in particular the structure of the trough and the disc/dial and their cooperation [i.e., relative positions, orientations and sizes etc.], so that at the 50% mark the dial encounters some mild resistance such as hitting a small step on the trough or vise versa, i.e., the step is on the rotatable disc, to allow the user to easily set the intermediate state.

b) The division of 50% of the incoming water into the bypass and 50% going to the first compartment is usually not very important, in the sense that a division of 45/55 % or even 40/60% is not important to the average user, and thus the 50% is generally approximate.

In some embodiments, parts of the cap are replaceable such that different settings can be added, for example the user may desire a division of 80/20% and a dial can be provided that includes such a setting and the disc and trough may accordingly be replaced with other more suitable ones. In some embodiments the user may select the desired settings at the time of obtaining the filter, e.g., a number of models may be offered to the consumer. Other components such as the types of media may also be selectable. In some embodiments the consumer may be offered to come to a selling point to try different settings before purchase, or a trial filter may be picked up or sent to the consumer's home.

Other arrangements for the inlet and shapes of the selector, including dial, trough, are possible; however, the arcuate shape of the trough **136** well suits a circular dial in respect of compact structure and ease of use. In particular the size and shape of the open top **137** essentially match those of the solid part **139b,** which means that complete blockage of the bypass is available but also maximum access for incoming water to the first compartment **122** is available. In addition, the indications for the intermediate states of "50%" and "33%", which are the settings most useful for most users, may be placed prominently apart from the "0%" and "100%" settings when the arcuate trough and the circular dial are used, which is useful for ease of setting the filtration. The arrangement was also found to be easier to manufacture than other arrangements that were contemplated during the design of the filter.

Some embodiments further comprise a third compartment **126.** The third compartment **126** typically comprises cleaning filter material **152.**

In some embodiments the cleaning filter material **152** is ultrafilter material. The filter material **152** serves to remove microorganisms that might be in the water that comes into the filter **100** or in the second water-treating medium [e.g., carbon-based medium].

We now discuss some further useful features of the filter **100.**

In some embodiments, as shown in **Figure 1,** a filter element **162** is disposed within the second compartment **124** and covers the bypass outlet **144** such as to prevent ingress of the second water-treating medium [e.g., carbon-based medium such as activated carbon] into the bypass **140.** Such situation may arise when water supply is suddenly halted, and a sub-pressure build ups in the bypass **140** for example.

In other embodiments other means may be used such as a check valve in the bypass.

The at least one bypasses are preferably internal, meaning that they are wholly contained within the filter, i.e., do not extend out of the first compartment and the second compartment.

In preferred embodiments the cap **114** comprises a space **172** sized to accommodate expansion of the first water-treating medium. Such design allows tightly packing the first compartment **122** with dry material, thus maximizing the treatment, but allows the dry material room to expand when wettened.

In some embodiments the first water-treating medium is a water softening resin, e.g., an ion-exchange medium.

In some embodiments the second water-treating medium is selected from: titania, iron (III) oxides, iron (III) hydroxides, carbon-based media and mixtures thereof. Such media may remove unpleasant odours and flavours from the water such as from chlorine and sulfur-based compounds.

the carbon-based media are, for example, selected from a group consisting of: activated carbon, carbon nanotubes, carbon molecular sieves, charcoal, catalytic carbon and mixtures thereof.

The filter may comprise further compositions capable of treating the water, for example, to reduce traces of radioactive materials in the water. For example, we have discovered that a mixture of basalt, wood chips, cotton wool and activated carbon can significantly reduce the amount of thorium and uranium in water. Such mixture may comprise roughly equal amounts of each w/w. Such treatment mixture may be part of the first water-treatment medium and/or second water-treatment medium and/or in the filter material; in the first compartment and/or in the second compartment and/or the third compartment and/or in one or more bypasses.

Referring again to Figure 1, water may enter the second compartment and optionally the first compartment and flow down then up via the third compartment **126,** through the cleaning filter material **152** and then to a water outlet **212** extending from the cartridge **112,** through the disc **138** and out of the cap **114.** The water inlet **214** is shown in **Figure 3c** - it is essentially the selector **130.** A flexible pipe may be engaged with the water inlet **124** and then by selection of the dial water is accordingly divided in flow to the first compartment **122** and the second compartment **124.** Another flexible pipe [not shown] may be engaged with the water outlet **212.** Note that the pipe for the outlet may be placed inside the pipe for the inlet, thus minimizing clutter of the water purification system and maximizing the space **172** inside the cap **114.**

The cap **114** may comprise a base **115** with small holes [not shown in the figures] through which water can seep into the first compartment **122.** A separating filter element **166** can be placed at the top of the first compartment **122** that separates the first water-treating medium from the base **115,** to minimize escape of the first water-treating medium into the cap **114.** The separating filter element **166** may be sponge-like and donut-shaped, which in some embodiments is slid onto the third compartment **126.** Similarly, a separating filter element **164** may be disposed between the first water-treating medium and the second water-treating medium, thus participating in defining the second compartment **124** and minimizing mixing of the first water-treating medium with the second water-treating medium. The second water-treating medium may fill up part of the third compartment **126,** in which case another separating filter element **168** may be placed between the cleaning filter material **152** and the second water-treating medium.

The third compartment **126** may be inside an open-ended cylinder **118** with another separating filter element **169** to retain the second water-treating medium in the cylinder **118.** The cylinder **118** rests on a holed or slitted platform **190** that raises the cylinder **118** and allows water to seep from the second compartment **124** into the cylinder **118.**

The cartridge **112** may have a convex bottom to provide structural strength against the water pressure, and a ring around the convex bottom to allow the filter **100** to stand on a surface.

According to another aspect, a water treatment system is provided that comprises any of the filters described above, the system further comprising a filter head reversibly attachable to the filter cap, further comprising a water inlet extending from the filter head to inside the cap, such that water entering the cap for treatment spills onto the disc, and further comprising a water outlet extending from the cartridge, and into the filter head.

The system further may further comprise at least one of the following features:

an observation portal enabling view of water flowing through the water outlet;
a pressure-sensitive button capable of popping when pressure of water flowing out of the filter head is above a predetermined value and sinking when pressure of water flowing through the water outlet is below a predetermined value, and
a release portal for release of gases from water in the water outlet.

Such a button may also be advantageously used for systems lacking bypasses.

Note that we have been surprised that the popping button does not require a spring or other resilient means to pop up when the water pressure is adequate and pop down when the pressure decreases.

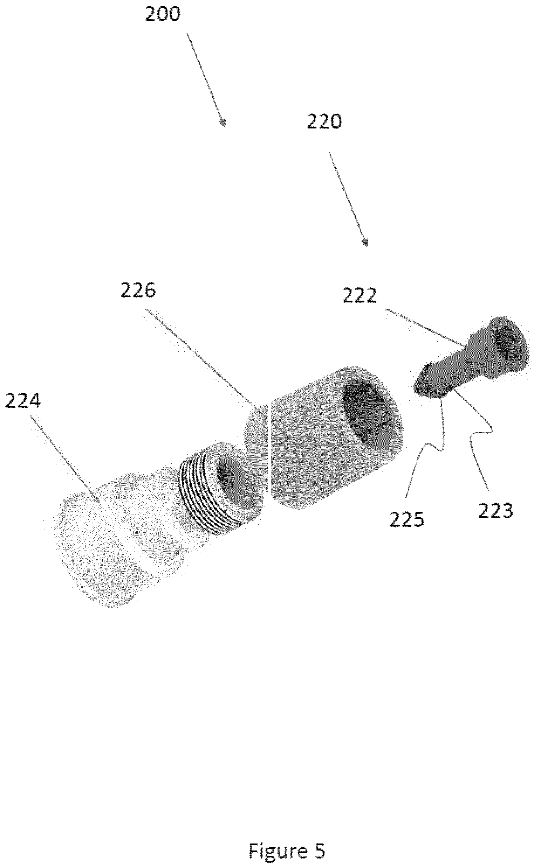

Reference is now made to an exploded perspective view in **Figure 5** in relation to the gas release button **220.** The filter head **200** includes the button **220.** The button comprises a piston **222** with gas-release holes **223** and an 0-ring **225.** The piston **222** is snugly held inside a threaded housing **224.** A threaded button cap 226 holds the piston **222** inside the housing **224.**

Such a system allows to monitor the water purification in several ways.

The filter head could replace the filter heads in household systems that have already been installed. However, the proposed filters may also be retrofitted to filter heads that are already installed in households, thus upgrading their capabilities and versatility and customization at no extra cost to the consumer.

Since the filter heads are often placed in places that are hard to access for manipulation, such as under a sink, setting the water treatment with a dial on the filter itself is a great advantage. The user, upon receiving a new filter, can easily set the treatment by placing the filter on a surface such as a tabletop or countertop, and turning the dial. Alternatively, a filter can easily be set at the vendor according to the user's request.

In some embodiments the observation portal, pressure sensitive button and release portal are disposed in the filter head.

A number of embodiments of the disclosure have been described. Nevertheless, it will be understood that various modifications may be made without departing from scope of the disclosure.

## Claims

1.  A water treatment system comprising a filter (100) and a filter head;

    the filter comprising:

        a cartridge (112);
        a cap (114) attached to the cartridge;
        the cartridge comprising:

            a first compartment (122) comprising at least one first water-treating medium;
            a second compartment 124) comprising at least one second water-treating medium;

        the cap comprising a selector (130);
        the filter further comprising at least one bypass (140) extending from the selector and throughout the first compartment and into the second compartment, each of the at least one bypass having an inlet (142) and an outlet (144);
        wherein the selector is operable to allow selecting:

    in a first state all water entering the filter (100) passing through the first compartment (122);
    in a second state all water entering the filter (100) bypassing the first compartment (122) and passing through the second compartment (124);
    in at least one intermediate state a first part of water entering the filter passing through the first compartment and a second part of water entering the filter bypassing the first compartment and passing through the second compartment, and the filter head reversibly attachable to the cap.

2.  The system of claim 1, further comprising a water outlet (212) extending from the cartridge (112), and into the filter head.

3.  The system of any one of claims 1 to 2 wherein the cap (114) comprises a reference marking (116), and wherein the selector comprises:
    a dial (132) marked thereon with indications (134), the indications representing:

        the first state, the second state, and at least one intermediate state,
        wherein each state is embossed at a different location on the dial;
        and wherein each state occurs when the indication representing the state is aligned with the reference marking.

4.  The system of any one of claims 1 to 3, the selector (130) further comprising an arcuate trough (136) with an open top (137);

        the dial (132) comprising a rotatable disc (138) having a cut-out part (139a) and a solid part (139b),
        the trough (136) and disc (138) structured and positioned relative to each other such that:

            in the first state the solid part (139b) completely covers the open top (137);
            in the second state the cut-out part (139a) completely faces the open top (137), and in the at least one intermediate state the cut-out part (139a) incompletely faces the open top.

5.  The system of claim 4, further comprising a water inlet extending from the filter head to inside the cap, such that water entering the cap for treatment spills onto the disc.

6.  The system of any one of claims 1 to 5, further comprising a third compartment (126); the third compartment comprising filter material (152).

7.  The system of any one of claims 1 to 6, wherein the first water-treating medium is a water softening resin.

8.  The system of any one of claims 1 to 7, wherein second water-treating medium is selected from:
    titania, iron (III) oxides, iron (III) hydroxides, carbon-based media and mixtures thereof.

9.  The system of claim 4 or 5, further comprising a water outlet extending from the cartridge,
    through the disc and out of the cap.

10. The system of any one of claims 1 to 6, wherein the at least one bypasses (140) are internal to the cartridge.

11. The system of any one of claims 1 to 6, wherein in the first state all water passing through the first compartment subsequently passes through the second compartment.

12. The system of any one of claims 1 to 6, wherein one or more of the at least one bypass comprises compositions, and the compositions comprise magnesium and essentially do not comprise calcium.

13. The system of claim 7, wherein one or more of the at least one bypass comprises compositions, and the compositions comprise magnesium and essentially do not comprise calcium.

14. The system of claim 12 or 13, wherein none of the at least one bypass comprises compositions that essentially comprise calcium.

15. The system of any one of claims 1 to 14,

further comprising a pressure-sensitive button capable of popping when pressure of water flowing out of the filter head is above a predetermined value and sinking when pressure of water flowing out of the filter head is below a predetermined value, and optionally further comprising at least one of the following limitations: an observation portal enabling view of water flowing out of the filter head; a release portal for release of gases from water flowing out of the filter head; the observation portal, pressure sensitive button and/or release portal are disposed in the filter head.

**Patentansprüche**

1. Ein Wasseraufbereitungssystem umfassend einen Filter (100) und einen Filterkopf;

wobei der Filter Folgendes umfasst:

eine Kartusche (112); eine Kappe (114), die an der Kartusche angebracht ist; wobei die Kartusche Folgendes umfasst:

eine erste Kammer (122) umfassend mindestens ein erstes Wasserbehandlungsmedium; eine zweite Kammer (124) umfassend mindestens ein zweites Wasserbehandlungsmedium;

wobei die Kappe eine Auswahlvorrichtung (130) umfasst; wobei der Filter ferner mindestens einen Bypass (140) umfasst, der sich von der Auswahlvorrichtung heraus und durch die gesamte erste Kammer und in die zweite Kammer hinein erstreckt, wobei jeder von dem mindestens einen Bypass einen Einlass (142) und einen Auslass (144) hat; wobei die Auswahlvorrichtung bedienbar ist, um zu ermöglichen, dass Folgendes ausgewählt wird:

in einem ersten Zustand, das gesamte Wasser, das in den Filter (100) eintritt, durch die erste Kammer (122) strömt; in einem zweiten Zustand, das gesamte Wasser, das in den Filter (100) eintritt, die erste Kammer (122) umgeht und durch die zweite Kammer (124) strömt; in mindestens einem Zwischenzustand ein erster Teil des in den Filter eintretenden Wassers durch die erste Kammer strömt und ein zweiter Teil des in den Filter eintretenden Wassers die erste Kammer umgeht und durch die zweite Kammer strömt, und wobei der Filterkopf reversibel an der Kappe befestigt werden kann.

2. Das System von Anspruch 1, ferner umfassend einen Wasserauslass (212), der sich von der Kartusche (112) und in den Filterkopf hinein erstreckt.

3. Das System von einem der Ansprüche 1 bis 2, wobei die Kappe (114) eine Referenzmarkierung (116) umfasst und wobei die Auswahlvorrichtung Folgendes umfasst: eine Wählscheibe (132), die darauf mit Angaben (134) gekennzeichnet ist, wobei die Angaben Folgendes darstellen:

den ersten Zustand, den zweiten Zustand und mindestens einen Zwischenzustand, wobei jeder Zustand an einer anderen Stelle auf der Wählscheibe geprägt ist; und wobei jeder Zustand auftritt, wenn die Angabe, die den Zustand darstellt, mit der Referenzmarkierung ausgerichtet ist.

4. Das System von einem der Ansprüche 1 bis 3, wobei die Wählscheibe (130) ferner eine bogenförmige Wanne (136) mit einer offenen Oberseite (137) umfasst; wobei die Wählscheibe (132) eine drehbare Scheibe (138) mit einem ausgeschnittenen Teil (139a) und einem massiven Teil (139b) umfasst, die Wanne (136) und die Scheibe (138) strukturiert und relativ zueinander positioniert sind, sodass:

im ersten Zustand der massive Teil (139b) die offene Oberseite (137) vollständig bedeckt; im zweiten Zustand der ausgeschnittene Teil (139a) vollständig der offenen Oberseite (137) zugewandt ist, und in dem mindestens einen Zwischenzustand der ausgeschnittene Teil (139a) unvollständig der offenen Oberseite zugewandt ist.

5. Das System von Anspruch 4, ferner umfassend einen Wassereinlass, der sich von dem Filterkopf zu dem Inneren der Kappe erstreckt, so dass Wasser, das in die Kappe zur Behandlung eintritt, auf die Scheibe verschüttet wird.

6. Das System von einem der Ansprüche 1 bis 5, ferner umfassend eine dritte Kammer (126); wobei die dritte Kammer Filtermaterial (152) umfasst.

7. Das System von einem der Ansprüche 1 bis 6, wobei das erste Wasserbehandlungsmedium ein wasserenthärtendes Harz ist.

8. Das System von einem der Ansprüche 1 bis 7, wobei das zweite Wasserbehandlungsmedium ausgewählt ist aus: Titandioxid, Eisen(III)-oxiden, Eisen(III)-hydroxiden, Medien auf Kohlenstoffbasis und Mischungen davon.

9. Das System von Anspruch 4 oder 5, weiterhin umfassend einen Wasserauslass, der sich von der Kartusche, durch die Scheibe und von der Kappe hinaus erstreckt.

10. Das System von einem der Ansprüche 1 bis 6, wobei der mindestens eine Bypass (140) innerhalb der Kartusche sind.

11. Das System von einem der Ansprüche 1 bis 6, wobei in dem ersten Zustand das gesamte Wasser, das durch die erste Kammer strömt, anschließend durch die zweite Kammer strömt.

12. Das System von einem der Ansprüche 1 bis 6, wobei einer oder mehrere des mindestens einen Bypass Zusammensetzungen umfasst und die Zusammensetzungen Magnesium umfassen und im Wesentlichen kein Calcium umfassen.

13. Das System von Anspruch 7, wobei einer oder mehrere des mindestens einen Bypass Zusammensetzungen umfasst und die Zusammensetzungen Magnesium umfassen und im Wesentlichen kein Calcium umfassen.

14. Das System von Anspruch 12 oder 13, wobei keiner von dem mindestens einen Bypass Zusammensetzungen umfasst, die im Wesentlichen Calcium umfassen.

15. Das System von einem der Ansprüche 1 bis 14,

ferner umfassend einen druckempfindlichen Knopf, der herausgehen kann, wenn der Druck von Wasser, das aus dem Filterkopf fließt, über einem vorbestimmten Wert liegt und herunter gehen kann, wenn der Druck von Wasser, das aus dem Filterkopf fließt, unter einem vorbestimmten Wert liegt, und optional ferner umfassend mindestens eine der folgenden Einschränkungen: ein Beobachtungsportal, das eine Ansicht von Wasser, das aus dem Filterkopf fließt, ermöglicht; ein Freisetzungsportal zum Freisetzen von Gasen aus Wasser, das aus dem Filterkopf strömt; wobei das Beobachtungsportal, der druckempfindliche Knopf und/oder das Freisetzungsportal im Filterkopf angeordnet sind.

## Revendications

1. Un système de traitement de l'eau comprenant un filtre (100) et une tête de filtre ; le filtre comprenant :

une cartouche (112) ; un capuchon (114) fixé à la cartouche ; la cartouche comprenant :

un premier compartiment (122) comprenant au moins un premier milieu de traitement de l'eau ; un second compartiment 124) comprenant au moins un second milieu de traitement de l'eau ;

le capuchon comprenant un sélecteur (130) ; le filtre comprenant en outre au moins une dérivation (140) s'étendant à partir du sélecteur et à travers le premier compartiment et dans le second compartiment, chacune de la au moins une dérivation ayant une entrée (142) et une sortie (144) ; dans lequel le sélecteur peut fonctionner pour permettre de sélectionner :

dans un premier état, que toute l'eau entrant dans le filtre (100) passe à travers le premier compartiment (122) ; dans un second état, que toute l'eau entrant dans le filtre (100) contourne le premier compartiment (122) et passe à travers le second compartiment (124) ;
dans au moins un état intermédiaire, qu'une première partie de l'eau entrant dans le filtre passe à travers le premier compartiment et une seconde partie de l'eau entrant dans le filtre contourne le premier compartiment et passe à travers le second compartiment, et la tête de filtre étant fixée de manière réversible au capuchon.

2. Le système de la revendication 1, comprenant en outre une sortie d'eau (212) s'étendant à partir de la cartouche (112), et dans la tête de filtre.

3. Le système de l'une quelconque des revendications 1 à 2, dans lequel le capuchon (114) comprend un marquage de référence (116), et dans lequel le sélecteur comprend :
un cadran (132) marqué d'indications (134), les indications représentant :

le premier état, le second état et au moins un état intermédiaire,
dans lequel chaque état est gaufré à un emplacement différent sur le cadran ;
et dans lequel chaque état se produit lorsque l'indication représentant l'état est alignée avec le marquage de référence.

4. Le système de l'une quelconque des revendications 1 à 3, le sélecteur (130) comprenant en outre un creux arqué (136) avec une partie supérieure ouverte (137) ; le cadran (132) comprenant un disque rotatif (138) ayant une partie découpée (139a) et une partie massive (139b),
le creux (136) et le disque (138) étant structurés et positionnés l'un par rapport à l'autre de telle sorte que :

dans le premier état, la partie massive (139b) recouvre complètement la partie supérieure ouverte (137) ;
dans le second état, la partie découpée (139a) fait complètement face à la partie supérieure ouverte (137), et
dans le au moins un état intermédiaire, la partie découpée (139a) fait face de manière incomplète à la partie supérieure ouverte.

5. Le système de la revendication 4, comprenant en outre une entrée d'eau s'étendant de la tête de filtre à l'intérieur du capuchon, de sorte que l'eau entrant dans le capuchon pour le traitement se déverse sur le disque.

6. Le système de l'une quelconque des revendications 1 à 5, comprenant en outre un troisième compartiment (126) ; le troisième compartiment comprenant un matériau filtrant (152).

7. Le système de l'une quelconque des revendications 1 à 6, dans lequel le premier milieu de traitement de l'eau est une résine adoucissant l'eau.

8. Le système de l'une quelconque des revendications 1 à 7, dans lequel le second milieu de traitement de l'eau est choisi parmi :
l'oxyde de titane, les oxydes de fer (III), les hydroxydes de fer (III), les milieux à base de carbone et des mélanges de ceux-ci.

9. Le système de la revendication 4 ou 5, comprenant en outre une sortie d'eau s'étendant à partir de la cartouche, à travers le disque et hors du capuchon.

10. Le système de l'une quelconque des revendications 1 à 6, dans lequel les au moins une dérivation (140) sont internes à la cartouche.

11. Le système de l'une quelconque des revendications 1 à 6, dans lequel dans le premier état, toute l'eau passant à travers le premier compartiment passe ensuite à travers le second compartiment.

12. Le système de l'une quelconque des revendications 1 à 6, dans lequel une ou plusieurs des au moins une dérivation comprend des compositions, et les compositions comprennent du magnésium et ne comprennent essentiellement pas de calcium.

13. Le système de la revendication 7, dans lequel une ou plusieurs de la au moins une dérivation comprend des compositions, et les compositions comprennent du magnésium et ne comprennent essentiellement pas de calcium.

14. Le système de la revendication 12 ou 13, dans lequel aucune de la au moins une dérivation ne comprend de compositions qui comprennent essentiellement du calcium.

15. Le système de l'une quelconque des revendications 1 à 14,

comprenant en outre un bouton sensible à la pression capable de ressortir lorsque la pression de l'eau s'écoulant de la tête de filtre est supérieure à une valeur prédéterminée et de s'enfoncer lorsque la pression de l'eau s'écoulant de la tête de filtre est inférieure à une valeur prédéterminée, et comprenant en outre facultativement au moins l'une des limitations suivantes : un portail d'observation permettant de voir l'eau s'écoulant de la tête de filtre ;
un portail de libération pour la libération des gaz de l'eau s'écoulant de la tête du filtre ;

le portail d'observation, le bouton sensible à la pression et/ou le portail de libération sont disposés dans la tête du filtre.

Figure 1

Figure 2

Figure 3a

Figure 3b

Figure 3c

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0844012 A
- US 2016353920 A
- US 2015321926 A
- KR 20220069252 A